# EUROPEAN PATENT APPLICATION

(11) **EP 4 336 599 A1**
(43) Date of publication of application: **13.03.2024**
(21) Application number: 22930177.5
(22) Date of filing: 22.07.2022
(51) Int. Cl.: H01M 4/62, H01M 10/0525

(54) **MODIFIED BINDER, BINDER COMPOSITION, PREPARATION METHOD, NEGATIVE ELECTRODE SLURRY, NEGATIVE ELECTRODE SHEET, SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: ZHANG, Wenmeng, Ningde, Fujian 352100 (CN); LIU, Huihui, Ningde, Fujian 352100 (CN); WANG, Xinghui, Ningde, Fujian 352100 (CN); CHEN, Shuhua, Ningde, Fujian 352100 (CN)
(74) Representative: Gong, Jinping
(86) International application number: PCT/CN2022/107446
(87) International publication number: WO 2024/016331

(57) **Abstract**

The present application relates to a modified binder, a binder composition, a preparation method, an anode slurry, an anode plate, a secondary battery, a battery module, a battery pack, and an electric device. The modified binder includes a conductive carbon nanotube and a first grafting agent located on the conductive carbon nanotube, the first grafting agent includes a copolymer of acrylic-based monomer unit-acrylamide-based monomer unit and/or a copolymer of acrylic-based monomer unit-acrylonitrile-based monomer unit-acrylamide-based monomer unit.

## Description

### TECHNICAL FIELD

The present application relates to the technical field of secondary batteries, and in particular, to a modified binder, a binder composition, a preparation method, an anode slurry, an anode plate, a secondary battery, a battery module, a battery pack and an electrical device.

### BACKGROUND

Secondary batteries are widely used in all kinds of consumer electronic products and electric vehicles because of their outstanding features such as light weight, non-pollution and no memory effect. With the continuous development of the new energy industry, customers have raised higher requirements for secondary batteries.

Silicon-based anode materials are widely used because of their high capacity, but the conductivity of silicon-based anode materials is poor, in order to improve the conductivity of silicon anodes, carbon nanotubes are usually used as a conductive agent, but the preparation process of silicon anodes is prone to processing problems such as gelation of anode slurries.

### SUMMARY

In view of the technical problems in the related technologies, the present application provides a modified binder, a binder composition, a preparation method, an anode slurry, an anode plate, a secondary battery, a battery module, a battery pack and an electrical device, aiming to prevent problems such as anode slurry gelation during the preparation of an anode plate, and improve processing performance.

In order to achieve the above objectives, a first aspect of the present application provides modified binder, including:
a conductive carbon nanotube; and
a first grafting agent located on the conductive carbon nanotube, and the first grafting agent includes a copolymer of acrylic-based monomer unit-acrylamide-based monomer unit and/or a copolymer of acrylic-based monomer unit-acrylonitrile-based monomer unit-acrylamide-based monomer unit.

Compared with existing technologies, the present application at least includes the following advantageous effects:

The modified binder provided by the present application has the first grafting agent grafted on the conductive carbon nanotube, and the first grafting agent includes a copolymer of acrylic-based monomer unit-acrylamide-based monomer unit and/or a copolymer of acrylic-based monomer unit-acrylonitrile-based monomer unit-acrylamide-based monomer unit. The first grafting agent can increase the steric hindrance of the conductive carbon nanotube, enable a better dispersion of the conductive carbon nanotube, and reduce aggregation of the conductive carbon nanotube. The modified binder has good stability and good conductivity and can be used as a conductive agent. Applying the above-mentioned modified binder to an anode slurry can effectively prevent the gelation of the anode slurry and improve the processing performance.
In any embodiment of the present application, a monomer corresponding to the acrylic-based monomer unit includes acrylic acid and a C₁-C₆ alkyl-substituted acrylic-based monomer; optionally, a monomer corresponding to the acrylic-based monomer unit includes acrylic acid and a C₁-C₃ alkyl-substituted acrylic-based monomer; further optionally, a monomer corresponding to the acrylic-based monomer unit includes one or more of acrylic acid, methacrylic acid, ethylacrylic acid and propylacrylic acid;
a monomer corresponding to the acrylonitrile-based monomer unit includes acrylonitrile, a C₁-C₆ alkyl-substituted acrylonitrile-based monomer; optionally, a monomer corresponding to the acrylonitrile-based monomer unit includes acrylonitrile, a C₁-C₃ alkyl-substituted acrylonitrile-based monomer; further optionally, a monomer corresponding to the acrylonitrile-based monomer unit includes one or more of acrylonitrile, methacrylonitrile, ethylacrylonitrile and propylacrylonitrile; and
a monomer corresponding to the acrylamide-based monomer unit includes acrylamide, a C₁-C₆ alkyl-substituted acrylamide-based monomer; optionally, a monomer corresponding to the acrylamide-based monomer unit includes acrylamide, a C₁-C₃ alkyl-substituted acrylamide-based monomer; further optionally, a monomer corresponding to the acrylamide-based monomer unit includes one or more of acrylamide, N,N-dimethylacrylamide, ethylacrylamide and propylacrylamide.

In any embodiment of the present application, at 25°C, at 25°C, an aqueous solution of the modified binder with a solid content of 0.8%-1.4% has a viscosity of 20,000 mPa·s-40,000 mPa s.

In any embodiment of the present application, the first grafting agent has a weight average molar mass of 5,000 Da to 100,000 Da.

In any embodiment of the present application, the conductive carbon nanotube includes a single-walled carbon nanotube and a multi-walled carbon nanotube.

In any embodiment of the present application, the conductive carbon nanotube has a length of 1 ηm-5 ηm.

A second aspect of the application provides a binder composition, including the modified binder of the first aspect of the application; at 25°C, the second binder with a solid content of 3% has a viscosity of 2,000 mPa·s-7,000 mPa s.

In any embodiment of the present application, the second binder includes a copolymer of acrylic-based monomer unit-acrylamide-based monomer unit and/or a copolymer of acrylic-based monomer unit-acrylonitrile-based monomer unit-acrylamide-based monomer unit.
In any embodiment of the present application, a monomer corresponding to the acrylic-based monomer unit includes acrylic acid and a C₁-C₆ alkyl-substituted acrylic-based monomer; optionally, a monomer corresponding to the acrylic-based monomer unit includes acrylic acid and a C₁-C₃ alkyl-substituted acrylic-based monomer; further optionally, a monomer corresponding to the acrylic-based monomer unit includes one or more of acrylic acid, methacrylic acid, ethylacrylic acid and propylacrylic acid;
a monomer corresponding to the acrylonitrile-based monomer unit includes acrylonitrile, a C₁-C₆ alkyl-substituted acrylonitrile-based monomer; optionally, a monomer corresponding to the acrylonitrile-based monomer unit includes acrylonitrile, a C₁-C₃ alkyl-substituted acrylonitrile-based monomer; further optionally, a monomer corresponding to the acrylonitrile-based monomer unit includes one or more of acrylonitrile, methacrylonitrile, ethylacrylonitrile and propylacrylonitrile; and
a monomer corresponding to the acrylamide-based monomer unit includes acrylamide, a C₁-C₆ alkyl-substituted acrylamide-based monomer; optionally, a monomer corresponding to the acrylamide-based monomer unit includes acrylamide, a C₁-C₃ alkyl-substituted acrylamide-based monomer; further optionally, a monomer corresponding to the acrylamide-based monomer unit includes one or more of acrylamide, N,N-dimethylacrylamide, ethylacrylamide and propylacrylamide.

In any embodiment of the present application, the second binder has a polar group;

Optionally, the polar group includes one or more of -COOH, CN and an amide group.

In any embodiment of the present application, the second binder has a weight average molar mass of 50,000 Da-2,000,000 Da.

In any embodiment of the present application, a mass ratio of the modified binder to the second binder is 1:(8-12).

In any embodiment of the present application, at 25°C, an aqueous solution of the binder composition with a solid content of 3% has a viscosity of 15,000 mPa·s-30,000 mPa s.

A third aspect of the present application provides a preparation method for a modified binder, including the steps of:
reacting an acrylic-based monomer, an acrylamide-based monomer and the conductive carbon nanotube in a poly(vinyl alcohol) cellulose dispersion containing a persulfate to form the modified binder;
optionally, raw materials for preparing the modified binder also include an acrylonitrile-based monomer.

In any embodiment of the present application, a mass ratio between the acrylic-based monomer, the acrylonitrile-based monomer, the acrylamide-based monomer and the conductive carbon nanotube is (0.2-0.8):(0-0.18):(0.06-0.18):(0.2-0.6).

A fourth aspect of the present application provides a preparation method for a binder composition, including the steps of:
S1. preparing the modified binder by the method provided in the third aspect of the present application;
S2. preparing the second binder using an acrylic-based monomer and an acrylonitrile-based monomer; and
S3. mixing the modified binder with the second binder;
optionally, raw materials for preparation in step S2 also include an acrylamide-based monomer.

In any embodiment of the present application, in step S2, the acrylic-based monomer accounts for 50%-80% by mass of total monomers, the acrylonitrile-based monomer accounts for 20%-40% by mass of the total monomers, and the acrylamide-based monomer accounts for 0%-20% by mass of the total monomers.

A fifth aspect of the present application provides an anode slurry, including at least one of the modified binder of the first aspect of the present application, the binder composition of the second aspect of the present application, a modified binder prepared by the method of the third aspect of the present application, or a binder composition prepared by the method of the fourth aspect of the present application.

A sixth aspect of the present application provides an anode plate, including:
an anode current collector; and
an anode active material layer located on at least one surface of the anode current collector;
the anode active material layer includes at least one of the modified binder of the first aspect of the present application, the binder composition of the second aspect of the present application, a modified binder prepared by the method of the third aspect of the present application, or a binder composition prepared by the method of the fourth aspect of the present application.

In any embodiment of the present application, the anode active material layer further includes a first anode active material and a second anode active material, and a mass ratio between the first anode active material, the second anode active material and the binder composition is (80-95):(1-20):(0.5-2).

A seventh aspect of the present application provides a secondary battery, which includes the anode plate of the sixth aspect of the present application.

An eighth aspect of the present application provides a battery module, which includes the secondary battery of the seventh aspect of the present application.

A ninth aspect of the present application provides a battery pack, which includes the battery module of the eighth aspect of the present application.

A tenth aspect of the present application provides an electric device, which includes at least one of the secondary battery of the seventh aspect of the present application, the battery module of the eighth aspect of the present application, or the battery pack of the ninth aspect of the present application.

### BRIEF DESCRIPTION OF THE DRAWINGS

In order to more clearly illustrate the technical proposals of the present application, the accompanying drawings used in the present application will be briefly described below. It is apparent that the accompanying drawings described below are merely some embodiments of the present application. For those of ordinary skill in the art, other accompanying drawings can be obtained according to these accompanying drawings without making creative efforts.
FIG. 1 is a scanning electron microscope image (SEM) of the binder composition in Example 1.
FIG. 2 is a scanning electron microscope image (SEM) of a single-walled carbon nanotube alone.
FIG. 3 is a graph showing the comparison between the resistivities of the binder composition in Example 1 and the single-walled carbon nanotube alone.
FIG. 4 is a schematic diagram of the cycling capacity retention rates of the secondary batteries in Example 12 and Comparative Example 1;
FIG. 5 is a schematic diagram of an embodiment of the secondary battery.
FIG. 6 is an exploded view of FIG. 5.
FIG. 7 is a schematic diagram of an embodiment of the battery module.
FIG. 8 is a schematic diagram of an embodiment of the battery pack.
FIG. 9 is an exploded view of FIG. 8.
FIG. 10 is a schematic diagram of an embodiment of the device in which a secondary battery is used as a power source.

Reference numbers in the drawings are as follows:
1, battery pack; 2, upper container body; 3, lower container body; 4, battery module; 5, secondary battery; 51, casing; 52, electrode assembly; 53, cover plate; and 6, electric device.

### DETAILED DESCRIPTION OF THE EMBODIMENTS

The present application is further described below in conjunction with specific embodiments. It should be understood that these specific embodiments are intended to illustrate the present application only and are not intended to limit the scope of the present application.

The "range" disclosed in the present application is defined in the form of a lower limit and an upper limit, and the given range is limited by selecting a lower limit and an upper limit, and the selected lower limit and upper limit define the boundary of a special range. Ranges defined in this manner may be inclusive or exclusive and may be combined arbitrarily, i.e., any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4, and 2-5. In this application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer ≥ 2, it is equivalent to disclosing that the parameter is an integer such as 2, 3, 4, 5, 6, 7, 8, 9, 10, 11, 12, etc.

In the description herein, it should be noted that unless otherwise stated, "above" and "below" are inclusive of the present number, and "more" in the term "one or more" means two or more.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, all the steps in the present application may be performed sequentially or randomly, preferably sequentially. For example, the method including steps (a) and (b) means that the method may include steps (a) and (b) performed in sequence, and may also include steps (b) and (a) performed in sequence. For example, mentioning that the method may also include step (c), means that step (c) may be added to the method in any order, for example, the method may include steps (a), (b) and (c), may also include steps (a), (c) and (b), and may also include steps (c), (a) and (b).

Unless otherwise specified, "include" and "comprise" mentioned in the application represent an open type or a closed type. For example, "include" and "comprise" may mean that other components not listed may be included or comprised, or only listed components may be included or comprised.

In the descriptions herein, the term "or" is inclusive unless otherwise stated. That is, the phrase "A or B" means "A, B, or both A and B". More specifically, the condition "A or B" is satisfied by either: A is true (or present) and B is false (or absent); A is false (or absent) and B is true (or present); or both A and B are true (or present). Unless otherwise stated, terms used in the present application have a well-known meaning as commonly understood by those skilled in the art. Unless otherwise stated, the values of each parameter mentioned in the present application may be measured by various measurement methods commonly used in the art (e.g., the tests may be performed according to the methods given in the embodiments of the present application).

In addition, terms "first" and "second" are used for descriptive purposes only, and cannot be interpreted as indicating or implying relative importance or implicitly specifying the quantity of indicated technical features. Thus, the features defined as "first" and "second" may explicitly or implicitly include at least one of these features. In the description of the application, "a plurality of" means at least two, such as two, three, etc., unless otherwise specifically defined. In the description of the present application, "several" means at least one, such as one, two, etc., unless otherwise specifically defined.

Silicon-based anode materials are widely used because of their high capacity, but the conductivity of silicon-based anode materials is poor. In order to improve the conductivity of silicon anodes, carbon nanotubes are usually used as a conductive agent, but during the preparation of silicon anodes, anode slurry is prone to gelation and other processing issues. The technicians of the present application found that this is mainly resulted from the carbon nanotubes are difficult to disperse and easy to aggregate, which leads to the gelation of the anode slurry. In addition, the volume of the silicon-based anode materials expands and the particles become pulverized during cycling, resulting in reduced cycle life and poor cycle performance.

The modified binder provided by the application includes:
a conductive carbon nanotube;
a first grafting agent located on the conductive carbon nanotube, and the first grafting agent includes a copolymer of acrylic-based monomer unit-acrylamide-based monomer unit and/or a copolymer of acrylic-based monomer unit-acrylonitrile-based monomer unit-acrylamide-based monomer unit.

Without wishing to be bound by any theory, the modified binder of the present application is provided with a first grafting agent arranged on a conductive carbon nanotube, the first grafting agent includes a copolymer of acrylic-based monomer unit-acrylamide-based monomer unit and/or a copolymer of acrylic-based monomer unit-acrylonitrile-based monomer unit-acrylamide-based monomer unit. The first grafting agent can increase the steric hindrance of the conductive carbon nanotube, enable a better dispersion of the conductive carbon nanotube, and reduce aggregation of the conductive carbon nanotube. The modified binder has good stability and good conductivity and can be used as a conductive agent. Applying the above-mentioned modified binder to an anode slurry can effectively prevent the gelation of the anode slurry and improve the processing performance.

It can be understood, the first grafting agent may only include a copolymer of acrylic-based monomer unit-acrylamide-based monomer unit, or may only include a copolymer of acrylic-based monomer unit-acrylonitrile-based monomer unit-acrylamide-based monomer unit, and may also include both of a copolymer of acrylic-based monomer unit-acrylamide-based monomer unit and a copolymer of acrylic-based monomer unit-acrylonitrile-based monomer unit-acrylamide-based monomer unit.

In some of the embodiments, the first grafting agent is grafted on the conductive carbon nanotube through an addition polymerization reaction.

The inventors have found through in-depth research that, on the basis of the anode active material of the present application satisfying the above-mentioned conditions, the processing performance of the anode slurry and cycle performance of the secondary battery can be further improved if the anode active material also optionally satisfies one or more of the following conditions.

In some of the embodiments, a monomer corresponding to the acrylic-based monomer unit includes acrylic acid and a C₁-C₆ alkyl-substituted acrylic-based monomer; optionally, a monomer corresponding to the acrylic-based monomer unit includes acrylic acid and a C₁-C₃ alkyl-substituted acrylic-based monomer; further optionally, a monomer corresponding to the acrylic-based monomer unit includes one or more of acrylic acid, methacrylic acid, ethylacrylic acid and propylacrylic acid.

In some of the embodiments, a monomer corresponding to the acrylonitrile-based monomer unit includes acrylonitrile, a C₁-C₆ alkyl-substituted acrylonitrile-based monomer; optionally, a monomer corresponding to the acrylonitrile-based monomer unit includes acrylonitrile, a C₁-C₃ alkyl-substituted acrylonitrile-based monomer; further optionally, a monomer corresponding to the acrylonitrile-based monomer unit includes one or more of acrylonitrile, methacrylonitrile, ethylacrylonitrile and propylacrylonitrile.

In some of the embodiments, a monomer corresponding to the acrylamide-based monomer unit includes acrylamide, a C₁-C₆ alkyl-substituted acrylamide-based monomer; optionally, a monomer corresponding to the acrylamide-based monomer unit includes acrylamide, a C₁-C₃ alkyl-substituted acrylamide-based monomer; further optionally, a monomer corresponding to the acrylamide-based monomer unit includes one or more of acrylamide, N,N-dimethylacrylamide, ethylacrylamide and propylacrylamide.

In some of the embodiments, at 25°C, an aqueous solution of the modified binder with a solid content of 0.8%-1.4% has a viscosity of 20,000 mPa·s-40,000 mPa·s; for example, the viscosity may be 25,000 mPa·s-40,000 mPa s, 30,000 mPa·s-40,000 mPa s, 35,000 mPa s-40,000 mPa s or 25,000 mPa·s-35,000 mPa s, etc.; further, at 25°C, an aqueous solution of the modified binder with a solid content of 1% has a viscosity of 24,000 mPa·s-37,000 mPa·s.

The viscosity of the aqueous solution of the modified binder mentioned above is tested by the following method: weighing 500 g of the aqueous solution of the modified binder to be tested with a solid content of 0.8-1.4%, stirring and dissolving for 2 hours to make the solution of the modified binder to be tested completely stable and uniform, and measuring the viscosity, where different viscosities correspond to different spindles. Detection temperature: 25±1°C; spindle and rotating speed: 64# spindle, 12 r/min, taking the value at the sixth minute; equipment model: DV-2TLV Brookfield viscometer.

In some of these embodiments, the weight average molar mass of the first grafting agent is 5,000 Da-100,000 Da; for example, the weight average molar mass may be 6,000 Da-100,000 Da, 7,000 Da-90,000 Da, 10,000 Da-80,000 Da, or 30,000 Da-70,000 Da, and so on.

In some of the embodiments, the conductive carbon nanotube includes a single-walled carbon nanotube and a multi-walled carbon nanotube. The conductive carbon nanotube has the most efficient conductivity, which is much higher than that of conductive carbon black, capable of establishing a highly efficient conductive network in the silicon anode plate; when the modified binder containing a conductive carbon nanotube is used in a silicon anode, on the one hand, it can effectively reduce the impedance of the silicon anode, reduce the polarization, improve the electron transmission capacity, reduce the amount of conductive carbon black, and thus increase the amount of the anode active material; on the other hand, the modified binder containing a conductive carbon nanotube coated on the surface of the anode active material can inhibit the expansion of silicon materials, reduce particle pulverization, prolong cycle life, and improve cycle performance. Further, a length of the conductive carbon nanotube is 1 µm-5 µm; for example, it may be 2 µm-5 µm, 3 µm-5 µm, or 4 µm-5 µm, and so on. Further optionally, the length of the conductive carbon nanotubes is 3 µm-5 µm.

The embodiment of the present application also provides a preparation method for a modified binder, including the steps of:
reacting an acrylic-based monomer, an acrylamide-based monomer and a conductive carbon nanotube in a poly(vinyl alcohol) cellulose dispersion containing a persulfate to form the modified binder;
optionally, raw materials for preparing the modified binder also include an acrylonitrile-based monomer.

In some of the embodiments, a mass ratio of persulfate to the conductive carbon nanotube is (0.03-0.09):(2-6); a mass ratio of the poly(vinyl alcohol) cellulose dispersion to the conductive carbon nanotube is (2-6):(0.2-0.6); Further, the poly(vinyl alcohol) cellulose dispersion has a concentration of 1%.

In some of the embodiments, the reaction temperature is 70°C-80°C; for example, the reaction temperature may be 72°C-80°C, 75°C-80°C, or 73°C-78°C. The reaction duration is 6 hrs-12 hrs; for example, the reaction duration may be 8 hrs-12 hrs, 10 hrs-12 hrs, or 7 hrs-11 hrs, etc.

In some of the embodiments, a mass ratio between the acrylic-based monomer, the acrylonitrile-based monomer, the acrylamide-based monomer and the conductive carbon nanotube is (0.2-0.8):(0-0.18):(0.06-0.18):(0.2-0.6); for example, the mass ratio may be (0.4-0.8):(0.2-0.18):(0.10-0.18):(0.4-0.6), or (0.3-0.7):(0-0.15):(0.08-0.16):(0.2-0.5) etc.

The embodiments of the present application also provide a binder composition, including the above-mentioned modified binder and a second binder; at 25°C, the second binder with a solid content of 3% has a viscosity of 2,000 mPa·s-7,000 mPa·s; for example, the viscosity may be 2,000 mPa·s-7,000 mPa s, 3,000 mPa·s-7,000 mPa s, 4,000 mPa·s-7,000 mPa s or 5,000 mPa·s-6,000 mPa·s, etc. After the second binder is blended with the modified binder, the second binder can further suspend and disperse the conductive carbon nanotubes in the modified binder, improving the stability of the binder composition. Further, at 25°C, the second binder with a solid content of 3% has a viscosity of 5,000 mPa·s-6,500 mPa s.

The viscosity of the above-mentioned second binder is tested by the following method: weighing the second binder to be tested with a dry weight of 15.0 g, adding pure water until the total weight of the second binder to be tested and the pure water is 500 g, stirring and dissolving for 2 hours to make the second binder to be tested completely dispersed and then taking the viscosity measurement, different viscosities corresponding to different spindles. Detection temperature: 25±1°C; spindle and rotating speed: 64# spindle, 12 r/min, taking the value at the sixth minute; equipment model: DV-2TLV Brookfield viscometer.

In some of the embodiments, the second binder includes a copolymer of acrylic-based monomer unit-acrylamide-based monomer unit and/or a copolymer of acrylic-based monomer unit-acrylonitrile-based monomer unit-acrylamide-based monomer unit.

It can be understood, the second binder may only include a copolymer of acrylic-based monomer unit-acrylamide-based monomer unit, or may only include a copolymer of acrylic-based monomer unit-acrylonitrile-based monomer unit-acrylamide-based monomer unit, or may include both a copolymer of acrylic-based monomer unit-acrylamide-based monomer unit and a copolymer of acrylic-based monomer unit-acrylonitrile-based monomer unit-acrylamide-based monomer unit.

In some of the embodiments, a monomer corresponding to the acrylic-based monomer unit includes acrylic acid and a C₁-C₆ alkyl-substituted acrylic-based monomer; optionally, a monomer corresponding to the acrylic-based monomer unit includes acrylic acid and a C₁-C₃ alkyl-substituted acrylic-based monomer; further optionally, a monomer corresponding to the acrylic-based monomer unit includes one or more of acrylic acid, methacrylic acid, ethylacrylic acid and propylacrylic acid.

In some of the embodiments, a monomer corresponding to the acrylonitrile-based monomer unit includes acrylonitrile, a C₁-C₆ alkyl-substituted acrylonitrile-based monomer; optionally, a monomer corresponding to the acrylonitrile-based monomer unit includes acrylonitrile, a C₁-C₃ alkyl-substituted acrylonitrile-based monomer; further optionally, a monomer corresponding to the acrylonitrile-based monomer unit includes one or more of acrylonitrile, methacrylonitrile, ethylacrylonitrile and propylacrylonitrile.

In some of the embodiments, a monomer corresponding to the acrylamide-based monomer unit includes acrylamide, a C₁-C₆ alkyl-substituted acrylamide-based monomer; optionally, a monomer corresponding to the acrylamide-based monomer unit includes acrylamide, a C₁-C₃ alkyl-substituted acrylamide-based monomer; further optionally, a monomer corresponding to the acrylamide-based monomer unit includes one or more of acrylamide, N,N-dimethylacrylamide, ethylacrylamide and propylacrylamide.

In some of the embodiments, the second binder has a polar group; when the second binder or the binder composition containing the second binder is used in a silicon anode, on the one hand, the polar group is able to form a hydrogen bond with the surface of the current collector, so that the second binder or the binder composition has good binding performance; on the other hand, the second binder or the binder composition is soluble in water, thus obtaining a water-soluble binder, which, when used in a silicon anode, is easy to be coated on the surface of anode active material particles to further inhibit the expansion of silicon materials, reduce particle pulverization, prolong cycle life, and improve cycle performance. Optionally, the polar group includes one or more of -COOH, -CN and an amide group. Further optionally, the polar group includes one or both of -COOH and -CN.

In some of the embodiments, the second binder has a weight average molar mass of 50,000 Da-2,000,000 Da; for example, the weight average molar mass may be 100,000 Da-2,000,000 Da, 500,000 Da-2,000,000 Da, 100,000 Da-2,000,000 Da, or 1,500,000 Da-2,000,000 Da etc.

In some of the embodiments, a mass ratio of the modified binder to the second binder is 1:(8-12); for example, the mass ratio my be 1:(9-12), 1:(10-12), 1:(9.5-11.5), or 1:(8-11), etc.

In some of these embodiments, at 25°C, the aqueous solution of the binder composition with a solid content of 3% has a viscosity of 15,000 mPa·s-30,000 mPa·s; for example, the viscosity may be 17,000 mPa·s-30,000 mPa·s, 20,000 mPa·s-30,000 mPa·s, 25,000 mPa·s-30,000 mPa·s, or 15,000 mPa·s-25,000 mPa·s, etc. When the binder composition with high viscosity is used in the silicon anode, it can have a good suspension effect on the anode active material. During the preparation of the anode slurry, only a small amount of sodium carboxymethylcellulose is required to disperse the anode active material, without the need for a large amount of sodium carboxymethylcellulose to maintain the suspension property of the anode slurry, which can further increase the content of the anode active material in the anode slurry, and at the same time improve the stability of the viscosity of the anode slurry.

The viscosity of the aqueous solution of the binder composition mentioned above is tested by the following method: weighing 500 g of the aqueous solution of the binder composition to be tested with a solid content of 3%, stirring and dissolving for 2 hours to make the solution of the binder composition to be tested completely stable and uniform, and measuring the viscosity, where different viscosities correspond to different spindles. Detection temperature: 25±1°C; spindle and rotating speed: 64# spindle, 12 r/min, taking the value at the sixth minute; equipment model: DV-2TLV Brookfield viscometer.

The embodiments of the present application also provide a preparation method for a binder composition, including the steps of:
S1. preparing a modified binder by the above-mentioned preparation method for a modified binder;
S2. preparing a second binder using an acrylic-based monomer and an acrylonitrile-based monomer; and
S3. mixing the modified binder with the second binder;
optionally, the raw materials for the preparation in step S2 also include an acrylamide-based monomer.

In some of the embodiments, in step S2, a mass proportion of the acrylic-based monomer in the total monomers is 50%-80%, a mass proportion of the acrylonitrile-based monomer in the total monomers is 20%-40%, and a mass proportion of the acrylamide-based monomer in the total monomers is 0%-20%.

The embodiment of the present application also provides an anode slurry, including at least one of the above-mentioned modified binder, the above-mentioned binder composition, the above-mentioned binder composition, a modified binder prepared by the above-mentioned preparation method for a modified binder, or a binder composition prepared by the above-mentioned preparation method for a binder composition.

The embodiment of the present application also provides a preparation method for an anode slurry, including the steps of:
mixing a first anode active material, a second anode active material, a conductive agent, sodium carboxymethylcellulose and a first part of deionized water to obtain a first mixed solution; and
adding a plasticizer, a binder composition, a styrene-butadiene rubber and a second part of the deionized water to the first mixed solution, stirring and mixing to prepare an anode slurry.

### Anode plate

The embodiments of the present application also provide an anode plate, including:
an anode current collector; and
an anode active material layer located on at least one surface of the anode current collector;
the anode active material layer includes at least one of the above-mentioned modified binder, the above-mentioned binder composition, a modified binder prepared by the above-mentioned preparation method for a modified binder, or a binder composition prepared by the above-mentioned preparation method for a binder composition.

In some of the embodiments of the present application, the anode active material layer further includes a first anode active material and a second anode active material, and a mass ratio between the first anode active material, the second anode active material and the binder composition is (80-95):(1-20):(0.5-2); for example, the mass ratio may be (85 -95):(4-20):(0.5-1), (90-95):(1-5):(1-1.5), or (80-90):(3-17):(0.7-1.7), etc.

As an example, the first anode active material may include at least one of the following materials: artificial graphite, natural graphite, soft carbon, hard carbon, a tin-based material and lithium titanate, etc.; the tin -based material may be at least one selected from metal tin, tin oxides and tin alloys. However, the present application is not limited to these materials, and other conventional materials that can be used as the anode active material of batteries may also be used. These anode active materials may be used alone or in combination of two or more.

As an example, the second anode active material may be s at least one selected from elemental silicon, silicon-oxides, silicon-carbon composites, silicon-nitrogen composites, and silicon alloys. These anode active materials may be used alone or in combination of two or more.

The mass ratio of the above-mentioned first cathode active material, the second cathode active material and the binder composition may be measured by the following method: respectively measuring the mass of the first cathode active material, the second cathode active material and the binder composition in the cathode active material layer, and calculating the ratio between the three.

In some embodiments, the anode active material layer may optionally further include a conventional binder. The conventional binder may be at least one selected from sodium carboxymethylcellulose (CMC), styrene-butadiene rubber (SBR), polyacrylic acid (PAA), sodium polyacrylate (PAAS), polyacrylamide (PAM), poly(vinyl alcohol) (PVA), sodium alginate (SA), polymethacrylic acid (PMAA) and carboxymethyl chitosan (CMCS).

The cathode active material layer usually also includes a conductive agent and other optional additives.

As an example, the conductive agent may be one or more of superconducting carbon, acetylene black, carbon black, Ketjen black, a carbon dot, a carbon nanotube, graphene and a carbon nanofiber.

As an example, other optional additives may be a PTC thermistor material and the like.

The anode current collector may utilize a conventional metal foil or a composite current collector. As an example, a copper foil may be used as the metal foil. The composite current collector may include a polymer base layer and a metal layer formed on at least one surface of the polymer substrate. The composite current collector may be formed by forming the metal material (copper, copper alloys, nickel, nickel alloys, titanium, titanium alloys, silver and silver alloys, etc.) on the polymer substrate (such as polypropylene (PP), polyethylene terephthalate (PET), polybutylene terephthalate (PBT), polystyrene (PS), polyethylene (PE) and the like).

As an example, the anode plate may be prepared by dispersing the above-mentioned components for preparing the anode plate, such as the anode active material, the conductive agent, the binder and any other components in a solvent (such as deionized water), to form an anode slurry; the anode slurry is coated on the anode current collector, and followed by processes such as drying and cold pressing to obtain the anode plate.

All raw materials above that are not specifically described are available commercially.

### Secondary battery

A secondary battery refers to a battery that can continue to be used after activating the active material by charging after the battery has been discharged.

Typically, a secondary battery includes a cathode plate, an anode plate, a separator and an electrolyte. During the charging and discharging process of the battery, active ions are intercalated and deintercalated back and forth between the cathode plate and the anode plate. The separator is disposed between the cathode plate and the anode plate to provide isolation. The electrolyte acts as a conductor of ions between the cathode plate and the anode plate.

### Cathode plate

In a secondary battery, the cathode plate generally includes a cathode current collector and a cathode film layer disposed on the cathode current collector, the cathode film layer includes a cathode active material.

As an example, the cathode current collector has two opposing surfaces in the thickness direction thereof, and the cathode film layer is disposed on any one or both of the two opposing surfaces of the cathode current collector.

As an example, the cathode current collector may utilize a metal foil or a composite current collector. For example, an aluminum foil may be used as the metal foil. The composite current collector may include a polymer base layer and a metal layer formed on at least one surface of the polymer substrate. The composite current collector may be formed by forming a metal material (aluminum, aluminum alloys, nickel, nickel alloys, titanium, titanium alloys, silver and silver alloys, etc.) on a polymer substrate (such as polypropylene (PP), polyethylene terephthalate (PET), polybutylene terephthalate (PBT), polystyrene (PS), polyethylene (PE) and the like).

When the secondary battery is a lithium-ion battery, the cathode active material may be a cathode active material known in the art that is applicable to lithium-ion batteries. As an example, the cathode active material may include at least one of the following materials: olivine lithium-containing phosphate, a lithium transition metal oxide, and respective modified compounds thereof. However, the present application is not limited to these materials, and other conventional materials that can be used as cathode active materials of batteries may also be used. These cathode active materials may be used alone or in combination of two or more. Examples of lithium transition metal oxide may include, but not limited to, at least one of a lithium cobalt oxide (such as LiCoO₂), a lithium nickel oxide (such as LiNiO₂), a lithium manganese oxide (such as LiMnO₂, LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁), a lithium nickel cobalt aluminum oxide (such as LiNi_{0.85}Co_{0.15}Al_{0.05}O₂) and their modified compounds, etc. An example of olivine lithium-containing phosphates may include, but not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

When the secondary battery is a sodium-ion battery, the cathode active material may be a cathode active material known in the art for sodium-ion batteries. As an example, the cathode active material may be used alone, or in a combination of two or more. The cathode active material may be selected from sodium-iron complex oxide (NaFeO₂), sodium-cobalt complex oxide (NaCoO₂), sodium-chromium complex oxide (NaCrO₂), sodium-manganese complex oxide (NaMnO₂), sodium-nickel complex oxide (NaNiO₂), sodium-nickel-titanium complex oxide (NaNi_{1/2}Ti_{1/2}O₂), sodium-nickel-manganese complex oxide (NaNi_{1/2}Mn_{1/2}O₂), sodium-iron-manganese complex oxide (Na_{2/3}Fe_{1/3} Mn_{2/3}O₂), sodium-nickel-cobalt-manganese complex oxide (NaNi_{1/3}Co_{1/3}Mn_{1/3}O₂), sodium iron phosphate (NaFePO₄), sodium manganese phosphate (NaMnPO₄), sodium cobalt phosphate (NaCoPO₄), a Prussian blue material, a polyanion material (phosphate, fluorophosphate, pyrophosphate, sulfate), etc., but the present application is not limited to these materials, and other conventional materials known in the art that can be used as the cathode active material of sodium-ion batteries may also be used in the present application.

The cathode film layer usually optionally includes a binder, a conductive agent and other optional additives.

As exampled, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

As examples, the conductive agent may include at least one of superconducting carbon, acetylene black, carbon black, Ketjen black, a carbon dot, a carbon nanotube, graphene, and carbon nanofiber.

As an example, the cathode plate may be prepared by the following method: dispersing the above-mentioned components for preparing the cathode plate, such as the cathode active material, the conductive agent, the binder and any other components, in a solvent (such as N-methylpyrrolidone) to form a cathode slurry; coating the cathode slurry on the cathode current collector, and carrying out drying, cold pressing and other processes to obtain the cathode plate.

### Separator

In some embodiments, the secondary battery also includes a separator. The type of separator in the present application is not particularly limited, and any well-known porous separators with good chemical stability and mechanical stability may be used.

In some embodiments, the separator may be made of at least one selected from glass fiber, non-woven fabrics, polyethylene, polypropylene, and polyvinylidene difluoride. The separator may be a single-layer film or a multi-layer composite film, with no particular limitations thereto. When the separator is a multi-layer composite film, the materials of the layers may be the same or different, with no particular limitations thereto.

In some embodiments, the cathode plate, the anode plate and the separator may form an electrode assembly by a winding process or a laminating process.

### Electrolyte

The secondary battery may include an electrolyte, which is used for ion conduction between the cathode and the anode. The electrolyte may include an electrolyte salt and a solvent.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxolato)phosphate (LiTFOP).

As an example, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), methyl ethyl sulfone (EMS) and diethyl sulfoxide (ESE).

In some embodiments, the electrolyte also includes an additive. For example, the additive may include an anode film-forming additive, and may include a cathode film-forming additive, and may also include an additive that improves certain battery properties, such as an additive that improves battery overcharge performance, an additive that improves battery high-temperature performance, an additive that improves battery low-temperature performance, and the like.

In some embodiments, the secondary battery of the present application is a lithium-ion secondary battery.

The secondary battery may be prepared according to the conventional method in the art, for example, the cathode plate, the separator, and the anode plate are wound (or stacked) in order, so that the separator is between the cathode plate and the anode plate to provide isolation, and a cell is obtained, and the cell is placed in an outer packaging, filled with an electrolyte and sealed to obtain the secondary battery.

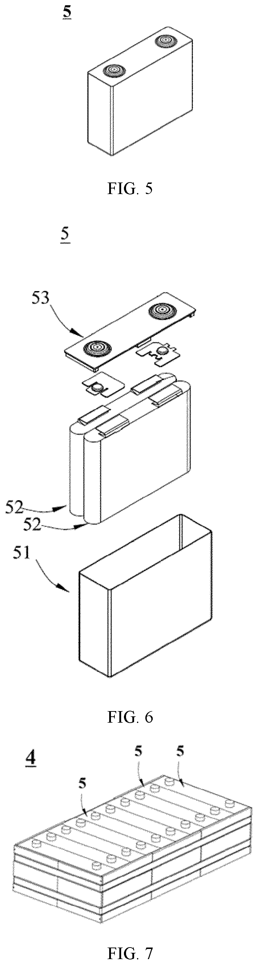

The shape of the secondary battery is not particularly limited in embodiments of the present application and may be cylindrical, square, or any other shape. FIG. 5 is an exemplary secondary battery 5 with a square structure.

In some embodiments, the secondary battery may include an outer packaging. The outer packaging is used to encapsulate the above-mentioned electrode assembly and the electrolyte.

In some embodiments, the outer packaging of the secondary battery may be a hard case, such as a hard plastic case, an aluminum case, a steel case, and the like. The outer packaging of the secondary battery may also be a soft bag, such as a pouch-type soft bag. The material of the soft bag may be plastic, and examples of the plastic include polypropylene, polybutylene terephthalate, polybutylene succinate, and the like.

In some embodiments, referring to FIG. 6, the outer packaging may include a casing 51 and a cover plate 53. The casing 51 may include a bottom plate and side plates attached to the bottom plate, and the bottom plate and the side plates enclose an accommodating cavity. The casing 51 has an opening communicated with the accommodating cavity, and the cover plate 53 may cover the opening to close the accommodating cavity.

The cathode plate, the anode plate and the separator may be wound or laminated to form an electrode assembly 52. The electrode assembly 52 is encapsulated in the accommodating cavity. The electrolyte is infiltrated into the electrode assembly 52. The number of the electrode assembly 52 in the secondary battery 5 may be one or multiple, which may be adjusted according to requirements.

In some embodiments, secondary batteries may be assembled into a battery module, and the number of the secondary batteries contained in the battery module may be multiple, and the specific number may be adjusted according to the application and capacity of the battery module.

FIG. 7 shows an exemplary battery module 4. In the battery module 4, a plurality of secondary batteries 5 may be arranged sequentially along the length of the battery module 4. Of course, the secondary batteries may also be arranged in any other manner. Further, the plurality of secondary batteries 5 may be secured by fasteners.

Optionally, the battery module 4 may also include a housing having a receiving space for receiving a plurality of secondary batteries 5.

In some embodiments, the above battery module may also be assembled into a battery pack, where the number of the battery modules contained in the battery pack may be adjusted according to the application and capacity of the battery pack.

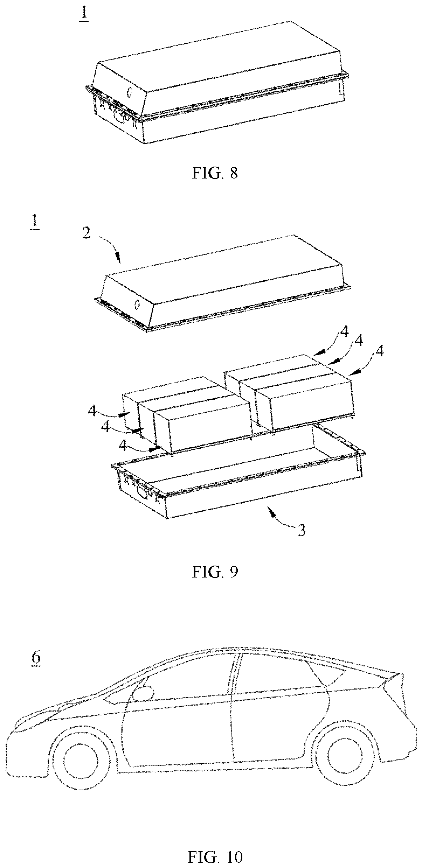

FIGS. 8 and 9 show an exemplary battery pack 1. The battery pack 1 includes a battery container and a plurality of battery modules 4 disposed in the battery container. The battery container includes an upper container body 2 and a lower container body 3, the upper container body 2 is able to cover the lower container body 3 and form an enclosed space for accommodating the battery modules 4. The plurality of battery modules 4 may be arranged in the battery container in any manner.

### Electric device

The present application also provides an electric device, the electric device includes at least one of the secondary battery, the battery module, or the battery pack. The secondary battery, the battery module, or the battery pack may be used as a power source for the device, or may serve as an energy storage unit for the device. The device may be, but is not limited to, a mobile device (e.g., cell phone, laptop, etc.), an electric vehicle (e.g., pure electric vehicle, hybrid electric vehicle, plug-in hybrid electric vehicle, electric bicycle, electric scooter, electric golf cart, electric truck, etc.), an electric train, a ship and satellite, an energy storage system, etc.

The device may select a secondary battery, a battery module or a battery pack depending on the needs of the use thereof.

FIG. 10 shows an exemplary device. The electric device 6 is a pure electric vehicle, a hybrid electric vehicle, or a plug-in hybrid electric vehicle, etc. To satisfy the high power and high energy density requirements of the secondary battery for this device, a battery pack or a battery module may be used.

As another example, the device may be a cell phone, a tablet, a laptop, etc. The device normally requires compactness and lightness and may employ a secondary battery as a power source.

The advantageous effects of the present application are further described below in conjunction with examples.

### Examples

In order to make the technical problems to be solved, the technical proposals and the advantageous effects of the present application clearer, the following will be further described in detail with the embodiments and the accompanying drawings. Obviously, the described embodiments are only a part of the embodiments of the present application, and not all of them. The following description of at least one exemplary embodiment is in fact merely illustrative and not intended to limit the present application and applications thereof in any way. Based on the embodiments in the present application, all other embodiments obtained by a person of ordinary skill in the art without creative effort fall within the scope of protection of the present application.

All materials used in the examples of the present application can be obtained commercially.

### I. Preparation of binder composition

### Example 1

1) 44 g of single-walled carbon nanotubes were processed to a length of 5 µm by ball milling, and added to 400 g of poly(vinyl alcohol) cellulose dispersion, and then 0.66 g of ammonium persulfate, 52.8 g of acrylic acid, and 13.2 g of acrylamide were added, stirred and reacted for 8 hrs at 80°C to obtain the modified binder, the modified binder was washed with water, centrifuged to remove impurities, and diluted with deionized water to obtain a pre-dispersion of the modified binder with a solid content of 1%;
2) 600 g of acrylic acid, 300 g of acrylonitrile, 100 g of acrylamide and 0.5 g of ammonium persulfate were added into 2000 g of deionized water, stirred and reacted at 80°C for 12 hrs to obtain a solution of a second binder with a solid content of 33.3%; and
3) 2 kg of the pre-dispersion in step 1) was mixed with 720 g of the solution in step 2) and stirred at 1200 r/min for 120 min, the temperature of the stirring tank: 80°C, after adding LiOH solution to adjust the pH to 7, deionized water was added to adjust the solid content of the binder composition to 3% to prepare a solution containing the binder composition. The mass ratio of the modified binder to the second binder was 1: 12.

### Examples 2 to 11

The preparation method for the binder composition in Examples 2 to 11 was basically the same as the preparation method for the binder composition in Example 1, but was different in at least one of the types of each monomer and the ratio of the amount of each monomer to the amount of the conductive carbon nanotubes when preparing the modified binder, the types of monomers and the percentages of each monomer used when preparing the second binder, and the mass ratio of the modified binder to the second binder. Details are shown in Table 1.

### II. Performance test of binder composition

### 1. Method of morphology test

The binder composition prepared in Example 1 and separate single-walled carbon nanotubes alone were diluted to a solid content of 0.05% of the single-walled carbon nanotubes respectively, and then were added dropwise on a copper foil and dried, a ZEISS sigma 300 scanning electron microscope was used for testing, the test was carried out according to the standard JY/T010-1996, and the morphology of the sample was observed.

It should be noted that the binder part in the binder composition prepared in Example 1 could be observed under the scanning electron microscope, and only the morphology of the single-walled carbon nanotubes could be observed.

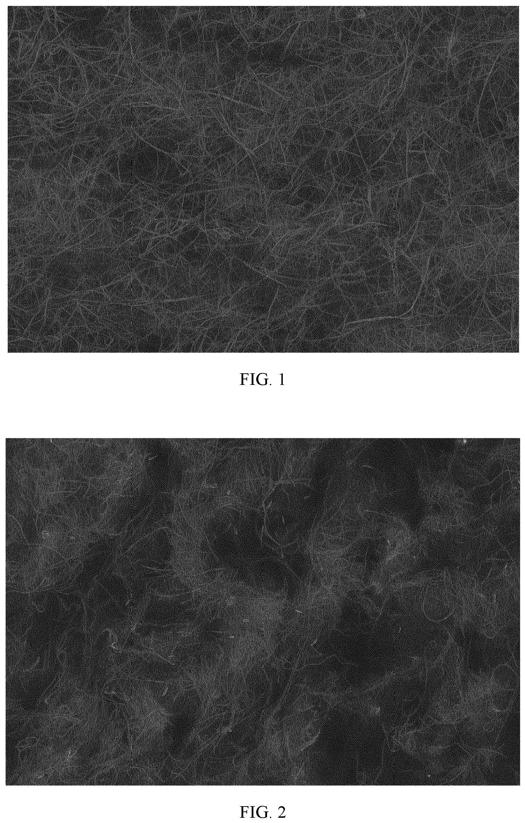

The SEM results of Example 1 are shown in FIG. 1, and the SEM results of the separate single-walled carbon nanotubes alone are shown in FIG. 2. As can be seen from FIGS. 1 and 2, the impurities on the single-walled carbon nanotubes in the binder composition from Example 1 are less and are more uniformly dispersed; while the separate single-walled carbon nanotubes have more impurities, with aggregation between the single-walled carbon nanotubes. This shows that the first grafting agent is capable of increasing the steric hindrance of the single-walled carbon nanotubes, and the second binder is capable of suspending and further dispersing the single-walled carbon nanotubes, so that the conductive carbon nanotubes can be better dispersed, thereby reducing aggregation of the conductive carbon nanotubes.

### 2. Method of resistivity test of binder composition

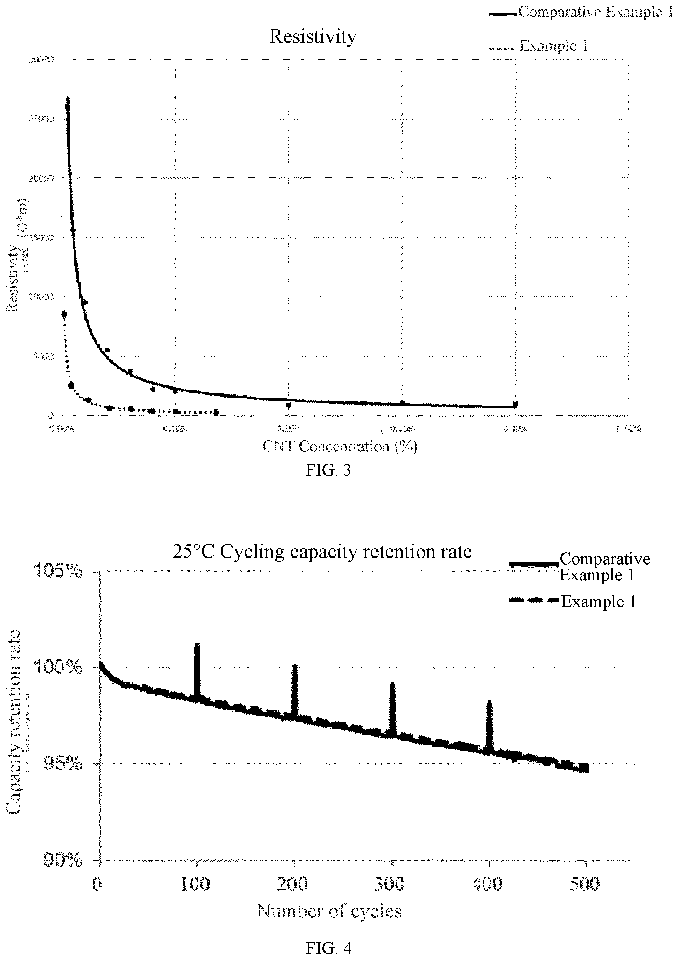

The binder composition of Example 1 and the separate single-walled carbon nanotubes alone were diluted stepwise according to a solid content of the single-walled carbon nanotubes of 0.2%, 0.1%, 0.08%, 0.06%, 0.04%, 0.02%, respectively, the diluted glue solution after each step was poured into a vial, the electrode of a slurry resistance tester was inserted into the vial, the upper, middle and lower channels were all immersed in the glue solution, and data of the upper, middle and lower channels were recorded to take an average value. The result is shown in FIG. 3.

It can be seen from FIG. 3 that with the same solid content of the single-walled carbon nanotubes, the binder composition in Example 1 has a lower resistivity and better conductivity, thus only a very small amount of binder composition is required to achieve the effect of building a conductive network.

### 3. Method of viscosity test

The solutions containing the modified binder, the solution containing the second binder and the solution containing the binder composition in each example were taken for viscosity measurement, details as follows:

The solutions containing the modified binder in each example were taken, and the different viscosities were obtained corresponding to different spindles. Detection temperature: 25±1°C; spindle and rotating speed: 64# spindle, 12 r/min, the value at the sixth minute was taken; equipment model: DV-2TLV Brookfield viscometer.

The solutions containing the second binder in each example were taken, deionized water was added to dilute until the solid content of the second binder was 3%, and the different viscosities were obtained corresponding to different spindles. Detection temperature: 25±1°C; spindle and rotating speed: 64# spindle, 12 r/min, the value at the sixth minute was taken; equipment model: DV-2TLV Brookfield viscometer.

The solutions containing the binder composition in each example were taken, and the different viscosities were obtained corresponding to different spindles. Detection temperature: 25±1°C; spindle and rotating speed: 64# spindle, 12 r/min, the value at the sixth minute was taken; equipment model: DV-2TLV Brookfield viscometer.

Some parameters and results of some performance tests in each example are shown in Table 1 below.

**Table 1**

| Grou P | Modified binder | | | | | | Second binder | | | | Binder compos ition | |
|---|---|---|---|---|---|---|---|---|---|---|---|---|
| | Types of condu ctive carbon nanotu bes | Types of acrylic-based monom ers | Types of acrylonitril e-based monomers | Types of acrylamide-based monomers | M11:M12:M 13:M10 | η1 mP a·s | Types and proporti ons of acrylic-based monom ers | Types and proportions of acrylonitril e-based monomers | Types and proportions of acrylamide-based monomers | η2 mP a·s | W 1 | η3 mP a·s |
| Exa mple 1 | Single walled carbon nanotu bes | Acrylic acid | / | Acrylamide | 0.528:0:0.13 2:0.44 | 283 00 | Acrylic acid 60% | Acrylonitril e 30% | Acrylamide 10% | 525 0 | 1:1 2 | 203 50 |
| Exa mple 2 | Single walled carbon nanotu bes | Acrylic acid | / | Acrylamide | 0.528:0:0.13 2:0.44 | 283 00 | Acrylic acid 60% | Acrylonitril e 30% | Acrylamide 10% | 525 0 | 1:1 0 | 244 50 |
| Exa mple 3 | Single walled carbon nanotu bes | Acrylic acid | / | Acrylamide | 0.528:0:0.13 2:0.44 | 283 00 | Acrylic acid 60% | Acrylonitril e 30% | Acrylamide 10% | 525 0 | 1:8 | 268 50 |
| Exa mpl e 4 | Single walled carbon nanotu bes | Acrylic acid | Acrylonitril e | Acrylamide | 0.2:0.18:0.0 6:0.2 | 242 50 | Acrylic acid 60% | Acrylonitril e 30% | Acrylamide 10% | 525 0 | 1:8 | 235 50 |
| Exa mple 5 | Single walled carbon nanotu bes | Acrylic acid | Acrylonitril e | Acrylamide | 0.8:0.10:0.1 8:0.6 | 368 50 | Acrylic acid 60% | Acrylonitril e 30% | Acrylamide 10% | 525 0 | 1:8 | 290 50 |
| Exa mple 6 | Single walled carbon nanotu bes | Acrylic acid | Acrylonitril e | Acrylamide | 0.528:0:0.13 2:0.44 | 283 00 | Acrylic acid 50% | Acrylonitril e 40% | Acrylamide 10% | 650 0 | 1:8 | 278 00 |
| Exa mple 7 | Single walled carbon nanotu bes | Acrylic acid | Acrylonitril e | Acrylamide | 0.528:0:0.13 2:0.44 | 283 00 | Acrylic acid 80% | Acrylonitril e 20% | / | 480 0 | 1:8 | 255 00 |
| Exa mple 8 | Single walled carbon nanotu bes | Acrylic acid | Acrylonitril e | Acrylamide | 0.528:0:0.13 2:0.44 | 283 00 | Acrylic acid 50% | Acrylonitril e 30% | Acrylamide 20% | 635 0 | 1:8 | 274 50 |
| Exa mple 9 | Doubl e-walled carbon nanotu bes | Methacr ylic acid | Ethylacrylo nitrile | Ethylmethacr ylamide | 0.528:0:0.13 2:0.44 | 324 00 | Propyla crylic acid 60% | Ethylacrylo nitrile 30% | N,N-dimethylacr ylamide 10% | 580 0 | 1:1 2 | 226 00 |
| Exa mple 10 | Doubl e-walled carbon nanotu bes | Ethylacr ylic acid | Propylacryl onitrile | N,N-dimethylacry lamide | 0.528:0:0.13 2:0.44 | 336 50 | Methacr ylic acid 60% | Methacrylo nitril 30% | Ethylacryla mide 10% | 540 0 | 1:1 0 | 223 50 |
| Exa mple 11 | Single walled carbon nanotu bes | Propyla crylic acid | Methacrylo nitrile | Propylacryla mide | 0.528:0:0.13 2:0.44 | 358 00 | Ethylacr ylic acid 60% | Propylacryl onitrile 30% | Propylacryl amide 10% | 610 0 | 1:9 | 289 50 |

M11 represents the amount of acrylic-based monomer used when preparing the modified binder, M12 represents the amount of acrylonitrile-based monomer used when preparing the modified binder, M13 represents the amount of acrylamide-based monomer used when preparing the modified binder, and M10 represents the amount of conductive carbon nanotubes used when preparing the modified binder; η1 represents the viscosity of the solution with a solid content of the modified binder of 1% at 25°C, and η2 the viscosity of the solution with a solid content of the second binder of 3% at 25°C, and η3 represents the viscosity of the solution with a solid content of the binder composition of 3% at 25°C; W1 represents the mass ratio of the modified binder to the second binder.

### III. Preparation of anode slurry

### Example 12

2397 g of graphite, 126 g of silicon powder, 13 g of conductive carbon black, and 8 g of sodium carboxymethylcellulose were added into a planetary mixing tank with a maximum capacity of 5 L, with a revolution speed of 25 r/min and an rotation speed of 800 r/min, and stirred for 15 min;

1253 g of deionized water was added into the planetary mixing tank, with a revolution speed of 15 r/min and a rotation speed of 400 r/min, and stirred for 60 min;

49 g of plasticizer, 953 g of the binder composition in Example 1, 147 g of deionized water were added in the planetary mixing tank, with a revolution speed of 25 r/min and a rotation speed of 1800 r/min, and stirred for 60 min;

49 g of styrene-butadiene rubber was added to the mixing tank, with a revolution speed of 25 r/mi and a rotation speed of 800 r/min, and stirred for 30 min.

### Examples 13 to 34

The preparation method for the anode slurry in Examples 13 to 34 was basically the same as the preparation method for the anode slurry in Example 12, but was different in at least one of the types of the binder composition used and the mass ratio between graphite, silicon powder and the binder composition during the preparation; at the same time, in Examples 13 to 34, by adjusting the addition amount of deionized water and styrene-butadiene rubber, the total mass of the anode slurry prepared was made the same as the total mass of anode slurry in Example 12. See Table 2 below for details.

### Comparative Example 1

The preparation method for the anode slurry in Comparative Example 1 was basically the same as the preparation method for the anode slurry in Example 12, but was different in that no binder composition was added, and a polyacrylic-based binder and single-walled carbon nanotubes were used instead, the sum of the mass of the aqueous binder and the single-walled carbon nanotubes was the same as the mass of the binder composition, and the mass of the single-walled carbon nanotubes was the same as the mass of the single-walled carbon nanotubes contained in the binder composition; at the same time, in Comparative Example 1, by adjusting the addition amount of deionized water and styrene-butadiene rubber, the total mass of the anode slurry prepared was made the same as the total mass of anode slurry in Example 12. See Table 2 below for details.

### Comparative Example 2

The preparation method for the anode slurry in Comparative Example 2 was basically the same as the preparation method for the anode slurry in Example 12, but was different in that no binder composition was added, and styrene butadiene rubber of the same mass was used instead; at the same time, in Comparative Example 2, by adjusting the addition amount of deionized water and styrene-butadiene rubber, the total mass of the anode slurry prepared was made the same as the total mass of anode slurry in Example 12. See Table 2 below for details.

### IV Performance tests of anode slurry

1. Method of slurry stability test: 4 cups of the slurry were taken from each example and comparative example; one cup of the slurry was respectively selected therefrom to stand for 0 hr, 4 hrs, 8 hrs, 12 hrs, 24 hrs and 48 hrs, and the viscosity was tested at different points of time; another two cups of slurry were taken to stand for 24 hrs and 48 hrs respectively, and the slurry at different depths was scooped up with a steel ruler to observe the fluidity of the slurry; the remaining one cup of slurry was left to stand for 48 hrs, a steel ruler was slowly inserted to the bottom of the beaker vertically along the edge of the beaker, and slowly slid towards the opposite edge. After reaching the edge, the steel ruler was slowly pulled out to check the precipitation brought out by the steel ruler. The specific results are shown in Table 2 below.
2. Method of viscosity test: the anode slurry in each example and comparative example was taken, diluted with deionized water to a solid content of 48%, and different viscosities were obtained corresponding to different spindles. Detection temperature: 25±1°C; spindle and rotating speed: 64# spindle, 12 r/min, the value at the sixth minute was recorded; equipment model: DV-2TLV Brookfield viscometer. The specific results are shown in Table 2 below.

### V. Preparation of secondary battery

1. Preparation of cathode plate: a LiNi_{0.8}Co_{0.1}Mn_{0.1}O₂ (NCM811) cathode active material, a polyvinylidene fluoride (PVDF) binder, a acetylene black conductive agent were dissolved in an N-methylpyrrolidone (NMP) solvent at a mass ratio of 97%: 1.5%: 1.5%, fully stirred and mixed evenly to prepare a cathode slurry; the cathode slurry obtained was coated on an aluminum-foil cathode current collector, dried, cold pressed, and slit to obtain a cathode plate.
2. Separator: a polyethylene (PE) film with a thickness of 12 µm was used as the separator.
3. Preparation of electrolyte: ethylene carbonate (EC), methyl ethyl carbonate (EMC), and diethyl carbonate (DEC) were mixed according to the volume ratio of 1:1:1, and LiPF₆ was fully dissolved in the above solution to obtain an electrolyte. The concentration of LiPF₆ in the electrolyte was 1 mol/L.
4. Preparation of anode plate: the anode slurries in the above-mentioned examples and comparative examples were respectively coated on a copper foil, dried at high temperature, cold pressed, and slit to obtain the anode plates.
5. Preparation of battery cell: he above cathode plate, the separator, the anode plate and the electrolyte were assembled into a pouch battery.

### VI. Battery performance tests

### 1. Method of capacity retention rate test

At 25°C, the batteries in the above-mentioned examples and comparative examples were respectively charged with a charging current of 1/3 C to 4.25 V, and charged with a constant voltage of 4.25 V until the current was 0.05 C, left for 5 min, the battery was discharged with 1/3 C until the voltage was 2.8 V, and the capacity obtained was recorded as the initial capacity C0. The above steps were repeated for the same battery mentioned above, and at the same time, the discharging capacity Cn after the nth cycle of the battery was record, then the capacity retention rate of the battery after each cycle was Pn = Cn/C0* 100%; P500, namely the data measured after 500 cycles following the above test conditions was obtained. The results are shown in Table 2 below.

The capacity retention rates of the secondary batteries in Example 12 and Comparative Example 1 are shown in FIG. 4. From FIG, 4, it can be seen that the binder composition of the present application has a comparable ability to maintain the cycle life of the secondary battery as in Comparative Example 1, without deterioration.

### 2. Method of binding force test for electrode plate

At 25°C, the anode plates in the above-mentioned examples and comparative examples were taken as the electrode plates to be tested, a specimen of a width of 0 mm and a length of 100-160 mm was cut with a blade, and a special double-sided tape was adhered on a steel plate, the tape having a width of 20 mm and a length of length 90-150 mm, and the electrode plate specimen obtained above was adhered on the double-sided tape with the testing side facing down, and then rolled three times in the same direction with a pressure roller; a paper strip having a width equal to the width of the electrode plate and a length 80-200 mm longer than the length of the specimen was inserted underneath the specimen and fixed by a masking tape; a tensile machine was switch on, and when the indicator was on, the limit block was adjusted to an appropriate position, an end of the steel plate without the electrode plate specimen was fixed with the lower grip. The paper strip was folded upwards and fixed with the upper grip, the position of the upper grip was adjusted by using the "up" and "down" buttons on the manual controller attached, the test was started by double-clicking the desktop software icon on a dedicated computer connected to the tensile machine. The tensile rate was 50 m/min, the test distance was 50 mm, and a data point was taken by the software every 10 s to measure the binding force of the anode plate. The detailed results are shown in Table 2 below.

3. Method of anode plate expansion performance test under full-charging cycle at 25°C for the secondary batteries in the above-mentioned examples and comparative examples

At 25°C, the secondary batteries prepared were charged to 4.4 V at a rate of 0.5 C, then charged at a constant voltage until the current was below 0.05 C, and then discharged to 2.8 V at a rate of 1 C; after 100 cycles of the secondary batteries, charged at a rate of 1 C with a constant current until the voltage was 4.25 V, then charged at a constant voltage at 4.25 V until the current was less than or equal to 0.05 C, left to stand for 5 min. The batteries were now fully charged, and the batteries after the cycling were then disassembled in a dry room to obtain the anode plate after full-charge cycling.

CP characterization was performed on the cross-section of the anode plates, the thickness L1 of the anode plates was measured, the thickness L0 of the anode plates after cold pressing was measured, and a rebound rate of the anode active material layer was calculated according to the formula (L1-L0)/L1 * 100.

Some of the parameter settings and performance data in each example and comparative example are shown in Table 2.

**Table 2**

| Group | Anode slurry | | | | | | | Anode plate | | Secondary battery |
|---|---|---|---|---|---|---|---|---|---|---|
| | Sources of binder composition | Amount of binder composition solution added | W2 | Styrene-butadiene rubber | Water | η4 mPa·s | Stability | Binding force N/cm | Rebound rate | Cycling capacity retention rate 500 cycle (%) |
| Example 12 | Binder composition in Example 1 | 953g | 79.9:4.2 :0.95 | 49g | 147g | 12500 | 48 hrs no gelation, no sedimentation | 14.4 | 28.28% | 93.40% |
| Example 13 | Binder composition in | 693g | 79.9:4.2 :0.69 | 65g | 391g | 8950 | 48 hrs no gelation, no | 11.4 | 30.13% | 92.74% |
| | Example 1 | | | | | | sedimentation | | | |
| Example 14 | Binder composition in Example 1 | 780g | 79.9:4.2 :0.78 | 60g | 309g | 10750 | 48 hrs no gelation, no sedimentation | 12.2 | 29.66% | 92.93% |
| Example 15 | Binder composition in Example 1 | 867g | 79.9:4.2 :0.867 | 54g | 228g | 11200 | 48 hrs no gelation, no sedimentation | 13.3 | 29.05% | 93.27% |
| Example 16 | Binder composition in Example 1 | 1040g | 79.9:4.2 :1.04 | 43g | 66g | 13300 | 48 hrs no gelation, no sedimentation | 14.9 | 27.96% | 93.54% |
| Example 17 | Binder composition in Example 2 | 953g | 79.9:4.2 :0.95 | 49g | 147g | 13050 | 48 hrs no gelation, no sedimentation | 13.5 | 27.95% | 93.55% |
| Example 18 | Binder composition in Example 2 | 693g | 79.9:4.2 :0.69 | 65g | 391g | 10400 | 48 hrs no gelation, no sedimentation | 11.1 | 29.67% | 92.88% |
| Example 19 | Binder composition in Example 2 | 780g | 79.9:4.2 :0.78 | 60g | 309g | 11050 | 48 hrs no gelation, no sedimentation | 11.8 | 29.23% | 93.06% |
| Example 20 | Binder composition in Example 2 | 867g | 79.9:4.2 :0.867 | 54g | 228g | 12350 | 48 hrs no gelation, no sedimentation | 12.7 | 28.64% | 93.34% |
| Example 21 | Binder composition in Example 2 | 1040g | 79.9:4.2 :1.04 | 43g | 66g | 14500 | 48 hrs no gelation, no sedimentation | 14.6 | 27.69% | 93.67% |
| Example 22 | Binder composition in Example 3 | 953g | 79.9:4.2 :0.95 | 49g | 147g | 14750 | 48 hrs slight gelation, no sedimentation | 13.8 | 27.55% | 93.63% |
| Example 23 | Binder composition in Example 3 | 693g | 79.9:4.2 :0.69 | 65g | 391g | 11150 | 48 hrs no gelation, no sedimentation | 10.9 | 29.27% | 92.95% |
| Example 24 | Binder composition in Example 3 | 780g | 79.9:4.2 :0.78 | 60g | 309g | 12700 | 48 hrs no gelation, no sedimentation | 11.6 | 28.54% | 93.18% |
| Example 25 | Binder composition in Example 3 | 867g | 79.9:4.2 :0.867 | 54g | 228g | 13450 | 48 hrs slight gelation, no sedimentation | 12.9 | 27.69% | 93.49% |
| Example 26 | Binder composition in Example 3 | 1040g | 79.9:4.2 :1.04 | 43g | 66g | 15800 | 48 hrs slight gelation, no sedimentation | 15.3 | 27.43% | 93.85% |
| Example 27 | Binder composition in Example 4 | 953g | 79.9:4.2 :0.95 | 49g | 147g | 12800 | 48 hrs no gelation, no sedimentation | 14.5 | 28.18% | 93.48% |
| Example 28 | Binder composition in Example 5 | 953g | 79.9:4.2 :0.95 | 49g | 147g | 14900 | 48 hrs slight gelation, no sedimentation | 14.7 | 27.96% | 93.51% |
| Example 29 | Binder composition in Example 6 | 953g | 79.9:4.2 :0.95 | 49g | 147g | 14800 | 48 hrs slight gelation, no sedimentation | 15.1 | 27.62% | 93.54% |
| Example 30 | Binder composition in Example 7 | 953g | 79.9:4.2 :0.95 | 49g | 147g | 13650 | 48 hrs slight gelation, no sedimentation | 13.7 | 31.08% | 92.48% |
| Example 31 | Binder composition in Example 8 | 953g | 79.9:4.2 :0.95 | 49g | 147g | 14750 | 48 hrs slight gelation, no sedimentation | 14.3 | 28.16% | 93.35% |
| Example 32 | Binder composition in Example 9 | 953g | 79.9:4.2 :0.95 | 49g | 147g | 13600 | 48 hrs no gelation, no sedimentation | 14.1 | 29.16% | 93.25% |
| Example 33 | Binder composition in Example 10 | 953g | 79.9:4.2 :0.95 | 49g | 147g | 13250 | 48 hrs no gelation, no sedimentation | 14.2 | 29.35% | 93.28% |
| Example 34 | Binder composition in Example 11 | 953g | 79.9:4.2 :0.95 | 49g | 147g | 14850 | 48 hrs slight gelation, no sedimentation | 14.3 | 29.23% | 93.26% |
| Comparative Example 1 | Aqueous binder + | / | 79.9:4.2 :0.95 | 49g | 147g | 13700 | 12 hrs moderate | 13.5 | 29.39% | 93.23% |
| | single-walled carbon nanotubes instead of binder composition | | | | | | gelation, no sedimentation | | | |
| Comparative Example 2 | Styrene-butadiene rubber instead of binder composition | / | 79.9:4.2 :0.95 | 108g | 051g | 7250 | 48 hrs no gelation, slight sedimentation | 17.3 | 39.1% | 87.65% |

W2 in Table 2 represents the mass ratio between the graphite, silicon powder and binder composition in the anode slurry in Examples 12-34, or the mass ratio between the graphite, silicon powder and the total mass of aqueous binder and single-walled carbon nanotubes in the anode slurry in Comparative Example 1, or the mass ratio between the graphite, silicon powder and the styrene-butadiene rubber instead of the binder composition in the anode slurry in Comparative Example 2; η4 represents the viscosity of the solution with a solid content of 1% of the binder composition at 25°C. Water in Table 2 represents the mass of deionized water added for the second time when preparing the anode slurry.

From the examples and Comparative Example 1 in Table 1 and Table 2, it can be seen that in the binder composition, the first grafting agent is grafted on the conductive carbon nanotubes, and the first grafting agent is capable of increasing the steric hindrance of the single-walled carbon nanotubes so that the conductive carbon nanotubes can be better dispersed and the aggregation of conductive carbon nanotubes can be reduced, thereby improving the stability of the binder composition; the second binder is capable of suspending and further dispersing the single-walled carbon nanotubes, thereby further improving the stability of the binder. Therefore, when the above-mentioned modified binder is applied to the anode slurry, it can effectively prevent the gelation of the anode slurry, improve the stability and the processability of the slurry. At the same time, compared with Comparative Example 1, grafting the first grafting agent on the conductive carbon nanotubes can still inhibit the volume expansion of the silicon anode material, without weakening the cycle performance of the final secondary battery.

From the examples and Comparative Example 2 in Table 1 and Table 2, it can be found that by utilizing the binder composition of the present application, the stability of the anode slurry is enhanced, and the processability is improved, and at the same time the volume expansion of the silicon anode material is inhibited, thereby improving the cycle performance of the secondary batteries.

The main differences in Examples 22-26 are that: the addition amount of the same type of the binder composition solution was different and the addition amount of the binder composition solution descended in the order of Example 26, Example 22, Example 25, Example 24 and Example 23, while slight gelation occurred in the anode slurry in Example 22, Example 25 and Example 26, which did not appear in Example 23 and Example 24. It is analyzed that this may be resulted from the addition amount of the binder composition being relatively large in the anode slurries of Example 22, Example 25 and Example 26, and the corresponding conductive carbon nanotube content increases, and due to the limited dispersibility of the conductive carbon nanotubes in the anode slurry, the slight interaction between the conductive carbon nanotubes leads to a slight gelation.

The main differences in Examples 1-3 are that, the mass ratios of the modified binder to the second binder in the binder composition were different, and when the mass ratio of the modified binder to the second binder is 1:( 8-12), the stability of the binder composition was effectively improved, thereby improving the stability of the anode slurry.

The main differences in Example 1 and Examples 4-5 are mainly that the mass ratios of the acrylic-based monomer, the acrylonitrile-based monomer, the acrylamide-based monomer and the conductive carbon nanotubes used when preparing the modified binder were different, and when the mass ratio of the acrylic-based monomer, the acrylonitrile-based monomer, the acrylamide-based monomer and the conductive carbon nanotubes is (0.2-0.8):(0-0.18):(0.06-0.18):(0.2-0.6), the steric hindrance of conductive carbon nanotubes can be increased.

The main differences in Example 1 and Examples 6-8 are that the mass percentages of the acrylic-based monomer, the acrylonitrile-based monomer, the acrylamide-based monomer used in the preparation of the second binder account with respect to the total monomers were different, and when the acrylic-based monomer accounts for 50%-80% by mass of the total monomers, the acrylonitrile-based monomer accounts for 20%-40% by mass of the total monomers, and the acrylamide-based monomer accounts for 0%-20% by mass of the total monomers, the prepared second binder can suspend and further disperse the conductive carbon nanotubes, thereby further improving the stability of the binder.

The above are only specific embodiments of the application, but the protection scope of the present application is not limited thereto. Any person familiar with the technical field can easily conceive various equivalent modifications or replacements within the technical scope disclosed in the present application, and these modifications or replacements should fall within the scope of protection of the present application. Therefore, the scope of protection of the present application should be defined by the protection scope of the claims.

## Claims

1. A modified binder, comprising:
a conductive carbon nanotube; and
a first grafting agent located on the conductive carbon nanotube, the first grafting agent comprising a copolymer of acrylic-based monomer unit-acrylamide-based monomer unit and/or a copolymer of acrylic-based monomer unit-acrylonitrile-based monomer unit-acrylamide-based monomer unit.

2. The modified binder as claimed in claim 1, wherein a monomer corresponding to the acrylic-based monomer unit comprises acrylic acid and a C₁-C₆ alkyl-substituted acrylic-based monomer; optionally, the monomer corresponding to the acrylic-based monomer unit comprises acrylic acid and a C₁-C₃ alkyl-substituted acrylic-based monomer; further optionally, the monomer corresponding to the acrylic-based monomer unit comprises one or more of acrylic acid, methacrylic acid, ethylacrylic acid and propylacrylic acid;
a monomer corresponding to the acrylonitrile-based monomer unit comprises acrylonitrile, a C₁-C₆ alkyl-substituted acrylonitrile-based monomer; optionally, the monomer corresponding to the acrylonitrile-based monomer unit comprises acrylonitrile, a C₁-C₃ alkyl-substituted acrylonitrile-based monomer; further optionally, the monomer corresponding to the acrylonitrile-based monomer unit comprises one or more of acrylonitrile, methacrylonitrile, ethylacrylonitrile and propyl acrylonitrile; and
a monomer corresponding to the acrylamide-based monomer unit comprises acrylamide, a C₁-C₆ alkyl-substituted acrylamide-based monomer; optionally, the monomer corresponding to the acrylamide-based monomer unit comprises acrylamide, a C₁-C₃ alkyl-substituted acrylamide-based monomer; further optionally, the monomer corresponding to the acrylamide-based monomer unit comprises one or more of acrylamide, N,N-dimethylacrylamide, ethylacrylamide and propylacrylamide.

3. The modified binder as claimed in any of claims 1 to 2, wherein, at 25°C, an aqueous solution of the modified binder with a solid content of 0.8%-1.4% has a viscosity of 20,000 mPa·s-40,000 mPa s.

4. The modified binder as claimed in any of claims 1 to 3, wherein, the first grafting agent has a weight average molar mass of 5,000 Da to 100,000 Da.

5. The modified binder as claimed in any of claims 1 to 4, wherein, the conductive carbon nanotube comprises a single-walled carbon nanotube and a multi-walled carbon nanotube.

6. The modified binder as claimed in any of claims 1 to 5, wherein, the conductive carbon nanotube has a length of 1 µm-5 µm

7. A binder composition, comprising the modified binder as claimed in any of claims 1 to 6 and a second binder;
at 25°C, the second binder with a solid content of 3% has a viscosity of 2,000 mPa·s-7,000 mPa·s.

8. The binder composition as claimed in claim 7, wherein, the second binder comprises a copolymer of acrylic-based monomer unit-acrylamide-based monomer unit and/or a copolymer of acrylic-based monomer unit-acrylonitrile-based monomer unit-acrylamide-based monomer unit.

9. The binder composition as claimed in claim 8, wherein, a monomer corresponding to the acrylic-based monomer unit comprises acrylic acid and a C₁-C₆ alkyl-substituted acrylic-based monomer; optionally, the monomer corresponding to the acrylic-based monomer unit comprises acrylic acid and a C₁-C₃ alkyl-substituted acrylic-based monomer; further optionally, the monomer corresponding to the acrylic-based monomer unit comprises one or more of acrylic acid, methacrylic acid, ethylacrylic acid and propylacrylic acid;
a monomer corresponding to the acrylonitrile-based monomer unit comprises acrylonitrile, a C₁-C₆ alkyl-substituted acrylonitrile-based monomer; optionally, the monomer corresponding to the acrylonitrile-based monomer unit comprises acrylonitrile, a C₁-C₃ alkyl-substituted acrylonitrile-based monomer; further optionally, the monomer corresponding to the acrylonitrile-based monomer unit comprises one or more of acrylonitrile, methacrylonitrile, ethylacrylonitrile and propyl acrylonitrile; and
a monomer corresponding to the acrylamide-based monomer unit comprises acrylamide, a C₁-C₆ alkyl-substituted acrylamide-based monomer; optionally, the monomer corresponding to the acrylamide-based monomer unit comprises acrylamide, a C₁-C₃ alkyl-substituted acrylamide-based monomer; further optionally, the monomer corresponding to the acrylamide-based monomer unit comprises one or more of acrylamide, N,N-dimethylacrylamide, ethylacrylamide and propylacrylamide.

10. The binder composition as claimed in any of claims 7 to 9, wherein, the second binder has a polar group;
optionally, the polar group comprises one or more of -COOH, CN and an amide group.

11. The binder composition as claimed in any of claims 7 to 10, wherein, the second binder has a weight average molar mass of 50,000 Da-2,000,000 Da.

12. The binder composition as claimed in any of claims 7 to 11, wherein, a mass ratio of the modified binder to the second binder is 1:(8-12).

13. The binder composition as claimed in any of claims 7 to 12, wherein, at 25°C, an aqueous solution of the binder composition with a solid content of 3% has a viscosity of 15,000 mPa·s-30,000 mPa·s.

14. A preparation method for the modified binder as claimed in any of claims 1 to 6, comprising the steps of:
reacting an acrylic-based monomer, an acrylamide-based monomer and the conductive carbon nanotube in a poly(vinyl alcohol) cellulose dispersion containing a persulfate to form the modified binder;
optionally, raw materials for preparing the modified binder further comprises an acrylonitrile-based monomer.

15. The preparation method for a modified binder as claimed in claim 14, wherein, a mass ratio between the acrylic-based monomer, the acrylonitrile-based monomer, the acrylamide-based monomer and the conductive carbon nanotube is (0.2-0.8):(0-0.18):(0.06-0.18):(0.2-0.6).

16. A preparation method for the binder composition as claimed in any of claims 7 to 13, comprising the steps of:
S1. preparing the modified binder by the method as claimed in any of claims 14 to 15;
S2. preparing the second binder using an acrylic-based monomer and an acrylonitrile-based monomer; and
S3. mixing the modified binder with the second binder;
optionally, raw materials for preparation in step S2 further comprise an acrylamide-based monomer.

17. The preparation method for a binder composition as claimed in claim 16, wherein, in step S2, the acrylic-based monomer accounts for 50%-80% by mass of total monomers, the acrylonitrile-based monomer accounts for 20%-40% by mass of the total monomers, and the acrylamide-based monomer accounts for 0%-20% by mass of the total monomers.

18. An anode slurry, comprising at least one of the modified binder as claimed in any of claims 1 to 6, the binder composition as claimed in any of claims 7 to 13, a modified binder prepared by the preparation method as claimed in any of claims 14 to 15, or a binder composition prepared by the preparation method as claimed in any of claims 16 to 17.

19. An anode plate, comprising:
an anode current collector; and
an anode active material layer located on at least one surface of the anode current collector;
wherein, the anode active material layer comprises at least one of the modified binder as claimed in any of claims 1 to 6, the binder composition as claimed in any of claims 7 to 13, a modified binder prepared by the preparation method as claimed in any of claims 14 to 15, or a binder composition prepared by the preparation method as claimed in any of claims 16 to 17.

20. The anode plate as claimed in claim 19, wherein, the anode active material layer further comprises a first anode active material and a second anode active material, and a mass ratio between the first anode active material, the second anode active material and the binder composition is (80-95):(1-20):(0.5-2).

21. A secondary battery, comprising the anode plate as claimed in any of claims 19 to 20.

22. A battery module, comprising the secondary battery as claimed in claim 21.

23. A battery pack, comprising the battery module as claimed in claim 22.

24. An electric device, comprising at least one of the secondary battery as claimed in claim 21, the battery module as claimed in claim 22, or the battery pack as claimed in claim 23.
